# FASCICULE DE BREVET EUROPEEN

(11) **EP 4 232 350 B1**
(45) Date de publication et mention de la délivrance du brevet: **21.01.2026**
(21) Numéro de dépôt: 21801854.7
(22) Date de dépôt: 22.10.2021
(51) Int. Cl.: B63B 1/08, B63B 1/32, B63B 1/40, B63B 27/16, B63B 1/28

(54) **APPENDICE HYDRODYNAMIQUE POUR NAVIRE ET NAVIRE COMPORTANT AU MOINS UN TEL APPENDICE**
HYDRODYNAMISCHER ANHÄNGSEL FÜR EIN SCHIFF UND SCHIFF MIT MINDESTENS EINEM SOLCHEN ANHÄNGSEL
HYDRODYNAMIC APPENDAGE FOR A SHIP, AND SHIP COMPRISING AT LEAST ONE SUCH APPENDAGE

(30) Priorité: 23.10.2020 FR 2010879
(43) Date de publication de la demande: 30.08.2023
(73) Titulaire: NAVAL Group, 75015 Paris (FR)
(72) Inventeur: GOUBAULT, Philippe, 44340 BOUGUENAIS (FR)
(74) Mandataire: Lavoix
(86) Numéro de dépôt international: PCT/EP2021/079396
(87) Numéro de publication internationale: WO 2022/084530

(56) Documents cités:
- EP-A2- 0 094 673
- EP-A2- 0 094 673
- WO-A1-2004/043773
- WO-A1-2004/043773
- WO-A1-2020/154756
- WO-A1-2020/154756
- WO-A2-2007/148966
- DE-A1- 3 936 280
- DE-A1- 3 936 280
- KR-A- 20060 072 847
- KR-A- 20060 072 847
- US-A- 4 050 397
- US-A- 5 046 444
- US-A- 5 046 444
- US-A1- 2007 017 428

## Description

La présente invention concerne les navires et les systèmes d'amélioration de la tenue à la mer et de réduction de la traînée de ceux-ci.

En particulier, elle concerne les appendices hydrodynamiques de coque immergés favorisant un écoulement harmonieux des filets d'eau le long de la coque du navire et une diminution des perturbations de sillage.

On connaît le dispositif du brevet EP 1 5751 129 ou de la demande de brevet DE 39 36 280 A1 qui décrit un navire comprenant un appendice hydrodynamique.

L'appendice hydrodynamique décrit est constitué par un plan porteur arrière orienté de façon à fournir une composante de force de soulèvement dirigée vers l'avant.

Ce dispositif permet, en plus de favoriser l'écoulement des filets d'eau, de redresser le navire par l'action d'une force sensiblement verticale et orientée vers le haut et l'avant. Il peut être avantageux, pour une raison d'optimisation de l'effet du dispositif, de disposer ce dispositif à l'arrière de la poupe du navire.

Cependant, sur certains navires, comme par exemple des navires militaires, un appendice hydrodynamique positionné à l'arrière de la poupe du navire peut être un obstacle pour la mise à l'eau d'engins comme des sonars remorqués ou des embarcations, qui se ferait par l'arrière du navire.

En effet, ces engins pourraient entrer en collision avec l'appendice hydrodynamique lors de la mise à l'eau ou en cas de mouvements du navire.

Dans ces cas d'usage, il serait nécessaire de mettre à l'eau les engins bien au-delà de la zone à proximité immédiate de l'appendice hydrodynamique ce qui implique l'allongement du porte-à-faux du système de mise à l'eau, ce qui peut engendrer de fortes contraintes mécaniques.

Pour éviter les inconvénients susmentionnés, l'invention a pour objet un navire selon la revendication 1.

L'invention a aussi pour objet un navire comprenant un appendice hydrodynamique tel que décrit précédemment, le bord d'attaque duquel est configuré de telle sorte qu'il comprenne au moins une partie de forme convexe.

L'invention a aussi pour objet un navire comprenant un appendice hydrodynamique tel que décrit précédemment prenant la forme de chevron.

L'invention a aussi pour objet un navire comprenant un appendice hydrodynamique tel que décrit précédemment pourvu d'ailettes à ses extrémités.

L'invention a aussi pour objet un navire comprenant un appendice hydrodynamique tel que décrit précédemment, dont le bord de fuite comporte au moins un aileron mobile.

L'invention sera mieux comprise à l'aide de la description qui va suivre faite en se référant aux dessins annexés, sur lesquels :
- [Fig 1] La figure 1 représente un navire vu de côté ;
- [Fig 2] La figure 2 représente un mode de réalisation de l'appendice hydrodynamique de l'invention ;
- [Fig 3] La figure 3 représente un autre mode de réalisation de l'appendice hydrodynamique de l'invention ;
- [Fig 4] La figure 4 représente un autre mode de réalisation encore de l'appendice hydrodynamique de l'invention ;
- [Fig 5] La figure 5 représente un autre mode de réalisation encore de l'appendice hydrodynamique de l'invention ;
- [Fig 6] La figure 6 représente un autre mode de réalisation encore de l'appendice hydrodynamique de l'invention ;
- [Fig 7] La figure 7 représente l'effet induit par l'utilisation d'ailerons dans un tel appendice ; et
- [Fig 8] La figure 8 représente un navire pourvu d'un appendice hydrodynamique de l'invention et d'un dispositif de mise à l'eau d'un sonar remorqué.

Sur les figures, les références :
- 1 désigne un appendice hydrodynamique,
- 2 désigne la coque d'un navire,
- 3 désigne un navire,
- 4 désigne un bord de fuite de l'appendice,
- 5 désigne un bord d'attaque de l'appendice,
- 6 désigne des extrémités de l'appendice,
- 7 désigne une partie concave du bord de fuite de l'appendice,
- 8 désigne une partie convexe du bord d'attaque de l'appendice,
- 9 désigne des ailettes d'extrémités de l'appendice,
- 10 et 11 désignent des ailerons mobiles de l'appendice,
- 12 désigne la surface de l'eau,
- 13 désigne la partie arrière du navire,
- 14 désigne des jambes de supportage de l'appendice,
- 15 illustre la portance générée par l'appendice,
- 16 et 17 désignent des axes de pivotement des ailerons de l'appendice,
- 18 désigne un système de mise à l'eau d'un sonar remorqué, et
- 19 désigne un sonar remorqué.

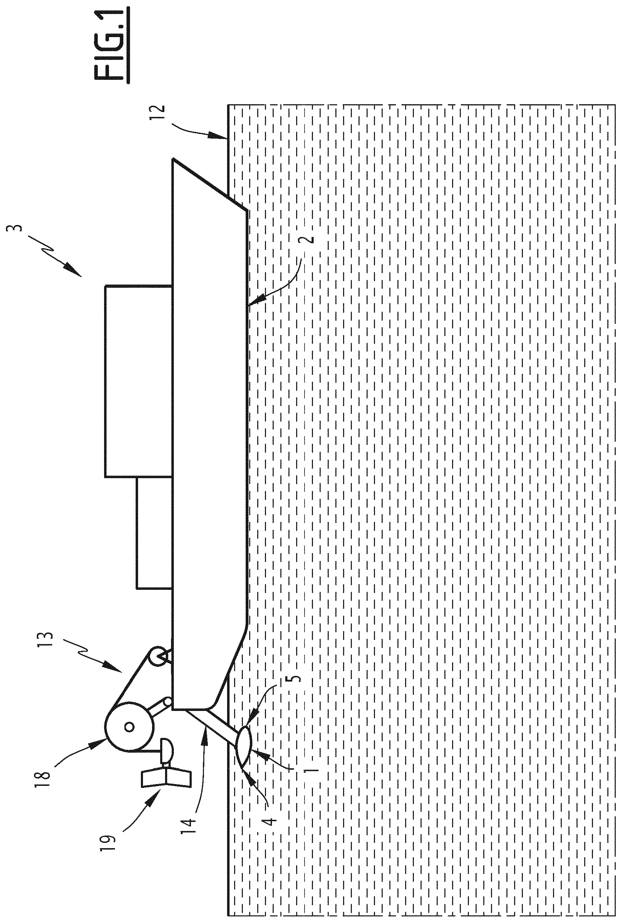

La figure 1 représente un navire 3 vu de côté sur un plan d'eau 12 (mer par exemple). La ligne de flottaison du navire (non représentée) est l'intersection de la coque 2 avec le plan d'eau 12.

On distingue les parties principales de l'invention, à savoir un mode de réalisation d'un appendice hydrodynamique 1 dans la partie arrière 13 du navire, sous la ligne de flottaison.

L'appendice hydrodynamique 1 est monté solidaire de la coque 2 par l'intermédiaire de jambes de supportage 14.

Un dispositif de mise à l'eau 18 d'engins est disposé à l'arrière 13 du navire 3 et permet de mettre à l'eau des engins tels que des sonars remorqués 19.

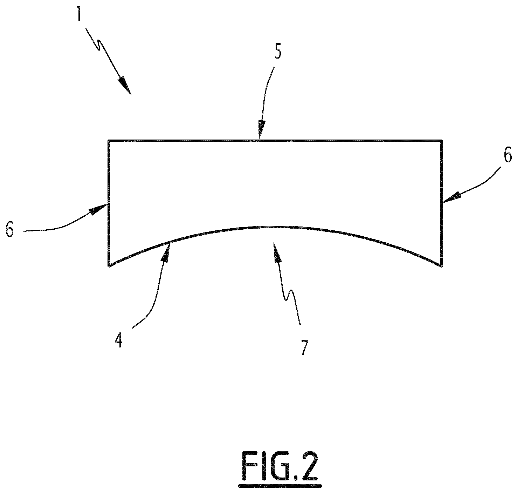

La figure 2 représente un premier mode de réalisation de l'appendice hydrodynamique 1 de l'invention, vu du dessus du navire non représenté, avec un bord d'attaque 5 rectiligne et un bord de fuite 4 présentant une forme concave 7.

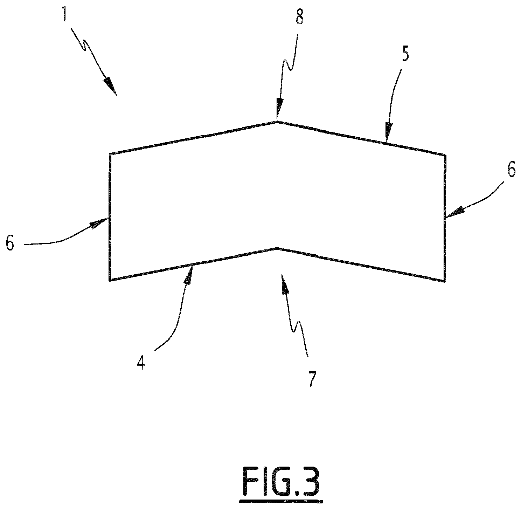

La figure 3 représente un autre mode de réalisation de l'appendice hydrodynamique 1 de l'invention, vu de dessus du navire non représenté, avec un bord d'attaque 5 reprenant la forme générale du bord de fuite 4, ce dernier étant composé de deux segments rectilignes.

La forme générale de l'appendice hydrodynamique 1 est alors celle d'un chevron en forme de pointe dont la pointe est dirigée vers l'avant du navire.

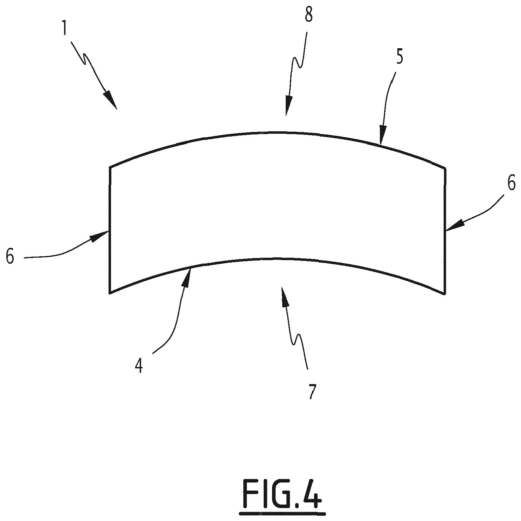

La figure 4 représente un autre mode de réalisation de l'appendice hydrodynamique 1 de l'invention, vu de dessous du navire non représenté, avec un bord d'attaque 5 reprenant la forme générale du bord de fuite 4, ce dernier prenant une forme convexe quelconque.

La forme générale de l'appendice hydrodynamique 1 est alors celle d'un chevron arrondi dirigé vers l'avant du navire.

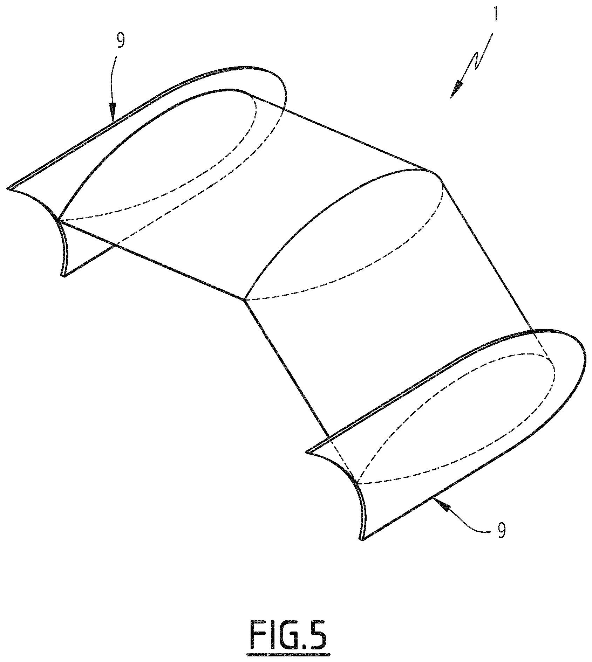

La figure 5 représente une amélioration de l'appendice hydrodynamique 1 de l'invention, vu en perspective du trois-quarts arrière du navire non représenté, et comportant à ses deux extrémités 6 des ailettes 9 verticales ou inclinées conçues sur le même principe des ailerettes (pour « winglets » en anglais) des ailes d'aéroplanes ou d'hydroptères pour éviter la formation de vortex en bout de profil de l'appendice hydrodynamique.

Le principe des ailerettes pour un hydroptère est décrit par exemple dans le document US 4 050 397.

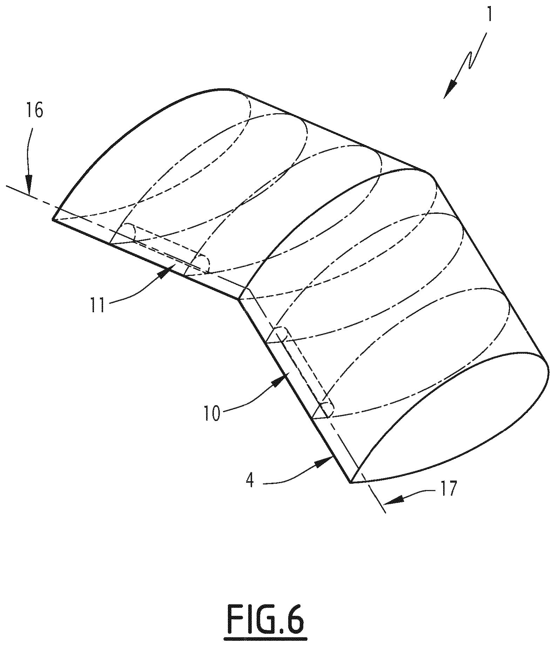

La figure 6 représente une amélioration de l'appendice hydrodynamique 1 de l'invention, vu en perspective du trois-quarts arrière du navire non représenté, et comportant de part et d'autre du bord de fuite 4 des ailerons 10, 11 inclus dans la forme de l'appendice hydrodynamique 1, munis d'au moins un degré de liberté de rotation autour d'un axe 16, 17 leur permettant d'être soulevés ou abaissés afin d'augmenter ou de diminuer la portance de la partie gauche ou droite de l'appendice hydrodynamique 1.

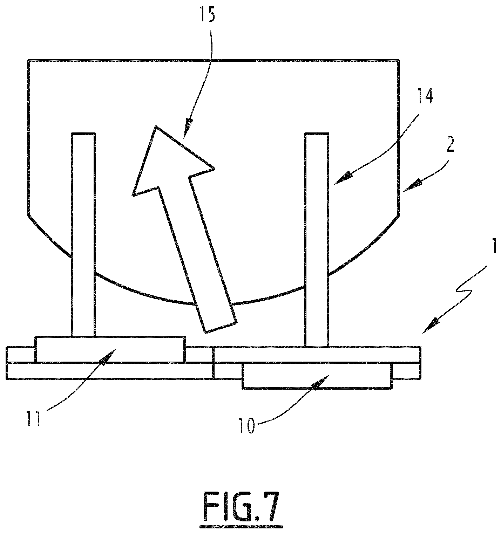

La figure 7 représente l'effet induit par l'utilisation des ailerons 10, 11 sur la portance 15 de l'appendice hydrodynamique 1. Lorsque l'aileron 11 est soulevé et l'aileron 10 est abaissé, la portance de la partie gauche de l'appendice hydrodynamique est inférieure à celle de la partie droite, ce qui résulte en une orientation de la portance 15 de l'appendice hydrodynamique 1 vers la gauche.

La portance 15 serait orientée vers la droite si l'aileron 11 était abaissé et l'aileron 10 était soulevé.

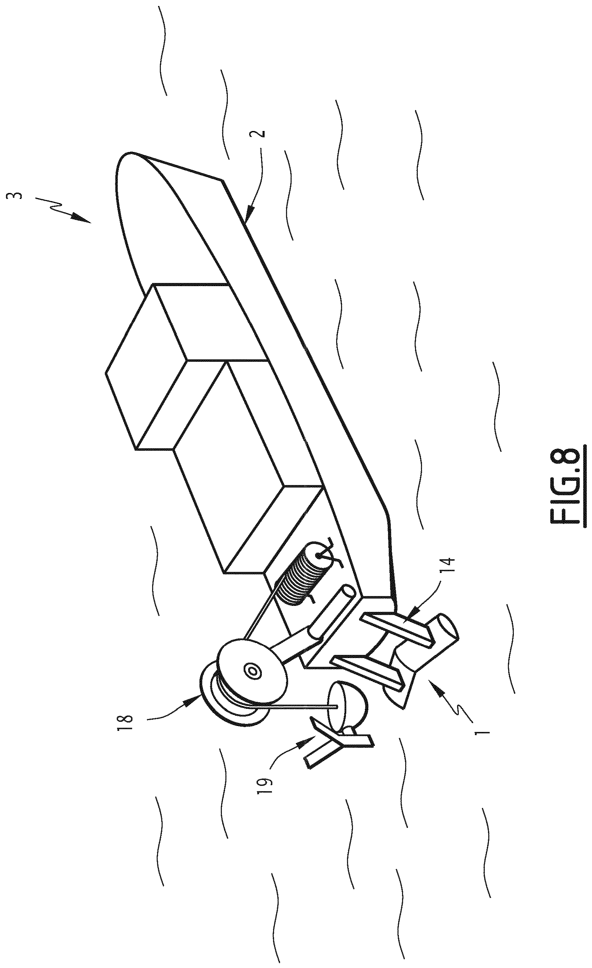

La figure 8 représente un navire 3 pourvu d'un appendice hydrodynamique 1 objet de l'invention et d'un dispositif 18 de mise à l'eau d'un sonar remorqué 19.

La configuration en chevron de l'appendice hydrodynamique 1 autorise la mise à l'eau du sonar remorqué 19 pour éviter que celui-ci ne vienne percuter l'appendice hydrodynamique 1 ou pour éviter qu'il soit gêné dans sa mise à l'eau par l'appendice hydrodynamique 1, la forme de ce dernier dégageant une zone libre à l'aplomb de la zone de mise à l'eau du dispositif de mise à l'eau 18.

Dans un mode de réalisation, l'invention a pour objet un navire 3 dont la coque 2 comprend sur sa partie arrière 13 et sous la ligne de flottaison au moins un appendice hydrodynamique 1 comprenant un bord de fuite 4 et un bord d'attaque 5, le bord de fuite ayant une forme concave afin de laisser un espace suffisant pour la mise à l'eau d'un sonar remorqué 19 par exemple.

Le bord d'attaque de l'appendice hydrodynamique 1 peut être alors rectiligne comme sur la figure 2.

La forme du profil hydrodynamique de l'appendice hydrodynamique et sa surface sont identiques à un appendice hydrodynamique n'ayant pas ces caractéristiques.

Ainsi les performances hydrodynamiques sont identiques à celles d'un appendice hydrodynamique connu.

Dans un autre mode de réalisation, l'appendice hydrodynamique 1 est en forme de chevron en forme de pointe comme sur la figure 3 ou arrondi comme sur la figure 4.

Dans un autre mode de réalisation, l'appendice hydrodynamique 1 comporte des surfaces 9 verticales ou inclinées aux deux extrémités de l'appendice hydrodynamique 3 permettant d'éviter la formation de vortex en bout de profil, à la manière des ailerettes des ailes d'un aéroplane ou d'un hydroptère.

L'appendice hydrodynamique provoque ainsi moins de remous.

Dans un autre mode de réalisation, l'appendice hydrodynamique 1 comporte au niveau du bord de fuite 4 des ailerons 10, 11 permettant d'augmenter ou de diminuer la portance de l'appendice hydrodynamique 1.

Ces ailerons 10, 11 peuvent être actionnés séparément par des dispositifs non représentés, connus de l'état de l'art comme des vérins, et créer une force de portance 15 inclinée vers la droite ou vers la gauche de l'appendice hydrodynamique 1.

L'appendice hydrodynamique 1 peut alors participer à la gestion du roulis du navire 3 sur lequel il est installé.

## Revendications

1. Navire (3) comprenant une coque (2) comprenant sur sa partie arrière (13) et sous la ligne de flottaison au moins un appendice hydrodynamique (1), ledit appendice comprenant un bord de fuite (4) et un bord d'attaque (5) et des extrémités (6), les extrémités de l'appendice comprenant des ailettes (9), le navire étant **caractérisé en ce qu'**il comprend un dispositif de mise à l'eau (18) d'engins disposé à la partie arrière du navire (3), le bord de fuite (4) comprenant au moins une partie de forme concave (7) dégageant une zone libre à l'aplomb de la zone de mise à l'eau du dispositif de mise à l'eau (18) afin de laisser un espace suffisant pour la mise à l'eau d'un engin.

2. Navire selon la revendication 1, **caractérisé en ce que** le bord d'attaque (5) comprend au moins une partie de forme convexe (8).

3. Navire selon la revendication 2, **caractérisé en ce que** le bord d'attaque (5) et le bord de fuite (4) forment un chevron.

4. Navire selon l'une quelconque des revendications précédentes, **caractérisé en ce que** le bord de fuite (4) comprend au moins un aileron mobile (10, 11).

## Patentansprüche

1. Schiff (3), umfassend einen Rumpf (2), umfassend an seinem Heck (13) und unterhalb der Wasserlinie mindestens einen hydrodynamisches Anhang (1), der Anhang umfassend eine Hinterkante (4) und eine Vorderkante (5) und Enden (6), wobei die Enden des Anhangs Flossen (9) umfassen, wobei das Schiff **dadurch gekennzeichnet ist, dass** es eine Wasserungsvorrichtung (18) für Geräte umfasst, die am Heck des Schiffes (3) angeordnet ist, die Hinterkante (4) umfassend mindestens einen konkav geformten Abschnitt (7), der einen freien Bereich senkrecht zu dem Wasserungsbereich der Wasserungsvorrichtung (18) freigibt, um ausreichend Platz zum Wassern eines Geräts zu lassen.

2. Schiff nach Anspruch 1, **dadurch gekennzeichnet, dass** die Vorderkante (5) mindestens einen konvex geformten Teil (8) umfasst.

3. Schiff nach Anspruch 2, **dadurch gekennzeichnet, dass** die Vorderkante (5) und die Hinterkante (4) ein Fischgrätenmuster bilden.

4. Schiff nach einem der vorherigen Ansprüche, **dadurch gekennzeichnet, dass** die Hinterkante (4) mindestens eine bewegbare Flosse (10, 11) umfasst.

## Claims

1. A ship (3) comprising a hull (2) comprising on its rear part (13) and below the waterline at least one hydrodynamic appendage (1), said appendage comprising a trailing edge (4) and a leading edge (5) and ends (6), the ends of the appendage comprise fins (9), the ship being **characterized in that** it comprises a launching device (18) for equipment arranged at the rear part of the ship (3), the trailing edge (4) comprising at least one concave-shaped part (7) clearing a free zone directly above the launching area of the launching device (18) in order to leave sufficient space for the launching of equipment.

2. The ship according to claim 1, **characterized in that** the leading edge (5) comprises at least one convex-shaped part (8).

3. The ship according to claim 2, **characterized in that** the leading edge (5) and the trailing edge (4) form a chevron.

4. The ship according to any one of the preceding claims, **characterized in that** the trailing edge (4) comprises at least one movable fin (10, 11).
